# EUROPÄISCHE PATENTSCHRIFT

(11) **EP 1 307 008 B1**
(45) Veröffentlichungstag und Bekanntmachung des Hinweises auf die Patenterteilung: **28.07.2004**
(21) Anmeldenummer: 01125749.0
(22) Anmeldetag: 29.10.2001
(51) Int. Cl.: H04L 12/44, H04L 12/46

(54) **Schnittstellenmodul zur seriellen Verknüpfung eines Ethernet Busses und Peripherie-Einrichtung**
Interface module for serially connecting Ethernet busses, and peripheral device
Module d'interface pour connexion serielle des bus Ethernet, et dispositif périphérique

(43) Veröffentlichungstag der Anmeldung: 02.05.2003
(73) Patentinhaber: Festo AG & Co, 73734 Esslingen (DE); Beck IPC GmbH, 35578 Wetzlar (DE)
(72) Erfinder: Schlösser, Ernest, 35759-Driedorf-Heiligenborn (DE)
(74) Vertreter: Vetter, Hans, Dipl.-Phys. Dr.

(56) Entgegenhaltungen:
- FR-A- 2 800 221
- US-A- 5 414 708
- SHEAR D: "AN ETHERNET LAN STANDARD EMERGES" EDN ELECTRICAL DESIGN NEWS, CAHNERS PUBLISHING CO. NEWTON, MASSACHUSETTS, US, Bd. 34, Nr. 9, 27. April 1989 (1989-04-27), Seiten 73,75-76,78,80, XP000028076 ISSN: 0012-7515
- J. F. WOLLERT: "Ethernet in der Automatisierungstechnik" ELEKTRONIK, WEKA FACHZEITSCHRIFTEN, Bd. 49, Nr. 21, 17. Oktober 2000 (2000-10-17), Seiten 66-75, XP001061692 Deutschland

## Beschreibung

Die Erfindung betrifft ein Schnittstellenmodul mit mindestens einer ersten Ethernet-Schnittstelle zum Senden und Empfangen von Nachrichten auf einer ersten Ethernet-Verbindung und mit einer mindestens einer zweiten Ethernet-Schnittstelle zum Senden und Empfangen von Nachrichten auf einer zweiten Ethernet-Verbindung. Die Erfindung betrifft ferner eine Peripherie-Einrichtung.

Schnittstellenmodule mit zwei oder mehr Ethernet-Schnittstellen sind bekannt. Beispielsweise kann es sich dabei um einen Switch, Hub oder Router handeln. Mit Hilfe eines Routers kann beispielsweise ein lokales Netzwerk, zum Beispiel ein LAN (Local Area Network), an das Internet angekoppelt werden, wofür beispielsweise ein DSL-Anschluss (Digital Subscriber Line) verwendet wird. Das eingangs genannte Schnittstellenmodul wird dabei durch den Router gebildet, der mit einer ersten Ethernet-Schnittstelle mit dem lokalen Netzwerk verbunden ist und mit einer zweiten Ethernet-Schnittstelle mit einem DSL-Modem, dass den Zugang zum Internet ermöglicht. Aufgabe des Routers ist, die beiden Netzwerke miteinander zu verbinden. Der Router leitet Nachrichten des einen Netzwerkes, die an das andere Netzwerk gerichtet sind, an dieses weiter und umgekehrt. Eine Nachricht, die nicht weitergeleitet wird, wird vom Router ignoriert.

Wie bereits erläutert, dient ein Router zur Verknüpfung eines logischen Netzwerkes mit einem anderen logischen Netzwerk. Zum Aufbau der Netzwerke an sich, das heißt zur Vernetzung von Netzwerkeinrichtungen, beispielsweise von Personal-Computern, von Steuerungsmodulen einer Handhabungsmaschine oder dergleichen, sind jedoch weitere Netzknoten erforderlich, beispielsweise Hubs oder Switches. Sollen also beispielsweise zwei oder mehr Mikroprozessoranordnungen, beispielsweise Embedded Systems, die jeweils zum Beispiel eine Prozesssteuerungs- und/oder Überwachungsaufgabe erfüllen, miteinander zu einem Ethernet-Netzwerk verknüpft werden, so benötigt man im einfachsten Fall einen Hub, für leistungsfähigere Anwendungen einen Switch. Von jeder Mikroprozessoranordnung muss dann eine Verbindungsleitung zu dem Hub hergestellt werden. Darin mag ein Grund liegen, dass man bei industriellen Anwendungen statt eines Ethernet-Netzwerks vorzugsweise eine Bus-Lösung anwendet, bei der beispielsweise die Mikroprozessoranordnungen mit Hilfe eines CAN-Busses (Controller Area Network) miteinander verbunden sind.

Die US 5,414,708 zeigt ein Schnittstellenmodul in Gestalt eines Bypasses, das über zwei Ethernet-Schnittstellen Nachrichten senden und empfangen kann. Sofern ein Repeater, der eine Art Verarbeitungsmodul bildet oder an ein Verarbeitungsmodul angeschlossen ist, mit Strom versorgt wird, werden die Nachrichten, die an der ersten Schnittstellen empfangen werden nicht an die zweite Schnittstelle weitergesendet, sondern an den Repeater. Das Schnittstellenmodul eignet sich zum Aufbau eines Daisy-Chain-Netzwerkes. Die Daisy-Chain-Verbindung bleibt auch bei abgeschaltetem Repeater intakt, da das Bypass-Schnittstellenmodul in dieser Situation den Datenverkehr am Repeater vorbeilenkt.

Die FR 2 800 221 A1 zeigt ebenfalls ein Daisy-Chain-Netzwerk mit Schnittstellenmodulen der eingangs genannten Art. Die Schnittstellenmodule enthalten Abschlusswiderstände, die schaltbar sind, je nach dem, ob ein Verarbeitungsmodul in Form einer Station angeschlossen ist oder nicht.

Es ist daher Aufgabe der Erfindung, einen vereinfachten Aufbau eines Ethernet-Netzwerkes bei optimiertem Datenverkehr bereitzustellen.

Diese Aufgabe wird bei dem eingangs genannten Schnittstellenmodul dadurch gelöst, dass es Prüfmittel zum Überprüfen einer von auf der ersten Verbindung empfangenen Nachricht aufweist, wobei die Prüfmittel bei der Überprüfung eine Adressinformation der Nachricht auswerten und wobei die Prüfmittel die Nachricht an mindestens ein mit dem Schnittstellenmodul verbundenes oder verbindbares Verarbeitungsmodul weiterleiten, wenn die Nachricht das mindestens eine Verarbeitungsmodul betrifft, und ansonsten die Nachricht auf der zweiten Verbindung weitersenden.

Zur Lösung ist ferner eine Peripherie-Einrichtung vorgesehen, die mit mindestens einem erfindungsgemäßen Schnittstellenmodul ausgestattet ist.

Im Gegensatz zu einem eingangs beschriebenen Router wird mit dem erfindungsgemäßen Schnittstellenmodul ein anderes Konzept verfolgt: an das erfindungsgemäße Schnittstellenmodul kann ein Ethernet-Endgerät oder auch ein weiteres erfindungsgemäßes Schnittstellenmodul angeschlossen werden, so dass das erfindungsgemäße Schnittstellenmodul zum einen als Kommunikationsschnittstelle für das Verarbeitungsmodul dient und zum anderen als Netzknoten, über den das weitere Ethernet-Endgerät oder das weitere Schnittstellenmodul an die erste Ethernet-Verbindung angekoppelt ist. Auf diese Weise kann sozusagen ein serieller Ethernet-Bus gebildet werden. Ein zusätzlicher Hub oder Switch ist zur Verbindung der Buskomponenten nicht erforderlich.

Bei dem Verarbeitungsmodul kann es sich beispielsweise um ein Modul zur Steuerung und/oder Überwachung einer Peripherie-Einrichtung, beispielsweise einer fluidtechnischen Ventilanordnung oder einem fluidtechnischen Wartungsgerät, handeln.

Vorteilhafte Ausgestaltungen der Erfindung finden sich in den abhängigen Ansprüchen sowie in der Beschreibung.

Zwar ist es prinzipiell möglich, dass das erfindungsgemäße Schnittstellenmodul sozusagen nur in einer Richtung arbeitet, das heißt auf der ersten Verbindung empfangene Nachrichten zur zweiten Verbindung weiterleitet, wenn die Nachrichten das Verarbeitungsmodul nicht betreffen. Man könnte beispielsweise eine Ringstruktur aus derartigen Schnittstellenmodulen aufbauen. Zweckmäßigerweise arbeitet das erfindungsgemäße Schnittstellenmodul jedoch bidirektional: die Prüfmittel sind dann derart ausgestattet, dass sie eine auf der zweiten Verbindung empfangene Nachricht an das Verarbeitungsmodul weiterleiten, wenn die Nachricht das Verarbeitungsmodul betrifft, und ansonsten die Nachricht auf der ersten Verbindung weitersenden. Jedenfalls ist das "bidirektionale" Schnittstellenmodul universell einsetzbar.

Die Prüfmittel werten bei der Überprüfung einer jeweils zu überprüfenden Nachricht eine Adressinformation, insbesondere eine Internetadresse und/oder eine MAC-Adresse (Media Access Controller), der Nachricht aus.

Vorzugsweise ist den Prüfmitteln ein Speicher zugeordnet, in dem die jeweils zu überprüfende Nachricht bei der Überprüfung zumindest teilweise zwischenspeicherbar ist. Zweckmäßigerweise sind in dem Speicher mehrere empfangene und zu überprüfende und/oder noch weiterzusendende Nachrichten zwischenspeicherbar.

Vorteilhaft sind die Prüfmittel zumindest teilweise als elektronische Schaltkreise ausgeführt. Eine derartige Hardware-Lösung ist sehr leistungsfähig.

Das Schnittstellenmodul ist vorzugsweise mit dem Verarbeitungsmodul zu einer Baueinheit zusammengefasst. Die Baueinheit ist zweckmäßigerweise zu einer Steuerung und/oder Überwachung einer Peripherie-Einrichtung ausgestaltet, die vorteilhaft eine fluidtechnische Peripherie-Einrichtung ist.

Zweckmäßigerweise bilden das Schnittstellenmodul und das Verarbeitungsmodul Bestandteile einer Mikroprozessoranordnung. Diese ist vorteilhaft eine Embedded System.

Die Prüfmittel und/oder das Verarbeitungsmodul enthalten vorzugsweise Programmcode, der von einem Mikroprozessor der Mikroprozessoranordnung geführt wird. Bei dem Mikroprozessor handelt es sich um die sogenannte CPU (Central Processing U-nit).

Die Mikroprozessoranordnung ist in einer vorteilhaften Variante der Erfindung eine Ein-Chip-Mikroprozessoranordnung, deren Komponenten Bestandteile eines einzigen elektronischen Bausteines bilden. Dieser kann beispielsweise ein sogenannter ASIC (Application Specific Integrated Circuit) sein. Jedenfalls ist eine Ein-Chip-Mikroprozessoranordnung sehr kompakt, was den jeweiligen Einsatzbereich der Mikroprozessoranordnung erweitert.

Die erfindungsgemäße Peripherie-Einrichtung weist mindestens ein Verarbeitungsmodul zu ihrer Steuerung und/oder Überwachung auf, sowie mindestens ein erfindungsgemäßes Schnittstellenmodul. Die Peripherie-Einrichtung kann beispielsweise mit einer weiteren derartigen Peripherie-Einrichtung in Serie geschaltet werden.

Bei der Peripherie-Einrichtung handelt es sich vorzugsweise um eine fluidtechnische Einrichtung, zum Beispiel um ein Druckluft-Wartungsgerät oder eine Druckluft-Ventilanordnung.

Zweckmäßigerweise sind bei der erfindungsgemäßen Peripherie-Einrichtung mehrere erfindungsgemäße Schnittstellenmodule vorhanden, zum Beispiel mindestens zwei derartige Schnittstellenmodule, wobei diese Schnittstellenmodule in Serie geschaltet sind. Die Peripherie-Einrichtung kann beispielsweise zwei Arbeitsachsen aufweisen, wobei jeder Arbeitsachse ein Verarbeitungsmodul zur Steuerung und/oder Überwachung zugeordnet ist. Jedem der Verarbeitungsmodule ist ein erfindungsgemäßes Schnittstellenmodul zugeordnet. Die Schnittstellenmodule sind vorteilhaft in Serie geschaltet, was den Verdrahtungsaufwand erheblich vermindert. Zudem ist kein Hub oder Switch oder ein sonstiger Netzknoten erforderlich, um die Verarbeitungsmodule zu vernetzen.

Nachfolgend wird die Erfindung anhand mehrerer Ausführungsbeispiele unter Zuhilfenahme der Zeichnung näher erläutert.

Es zeigen:
- Figur 1: erfindungsgemäße Schnittstellenmodule 10, 11, die in Serie geschaltet sind, und
- Figur 2: eine erfindungsgemäße Peripherie-Einrichtung 14 mit Ventilanordnungen 15a, 15b, 15c, denen jeweils ein erfindungsgemäßes Schnittstellenmodul 11a, 11b, 11c zugeordnet ist.

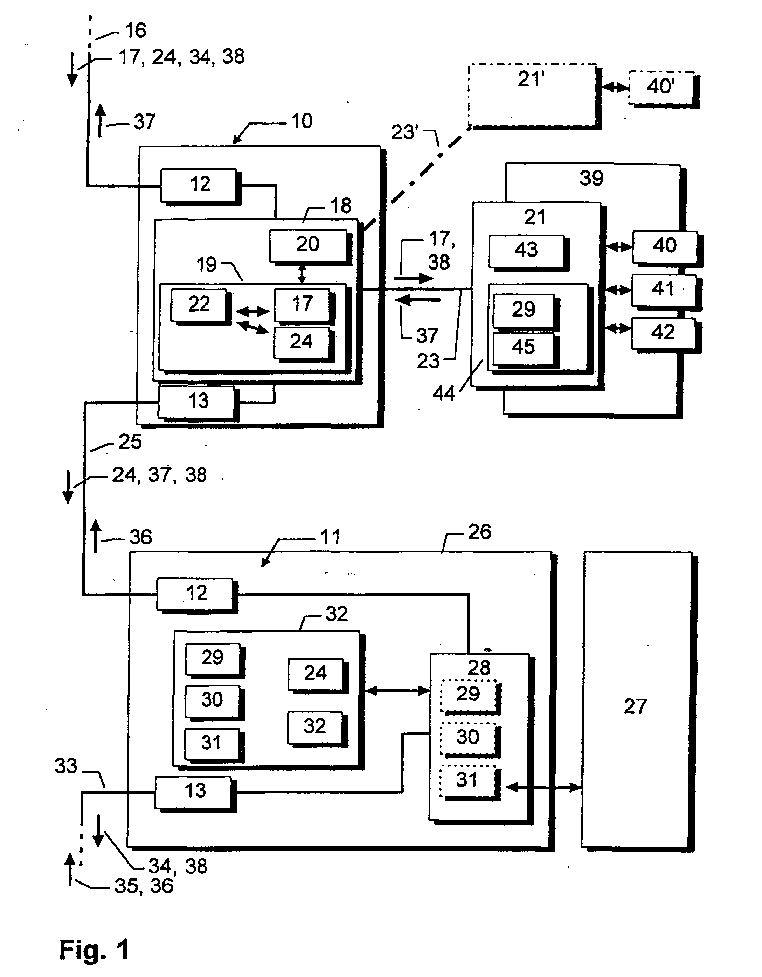

In Figur 1 sind mit den Schnittstellenmodulen 10 und 11 zwei unterschiedliche Ausführungsformen eines erfindungsgemäßen Schnittstellenmoduls schematisch dargestellt. Die Schnittstellenmodule 10, 11 weisen jeweils eine erste und mindestens eine zweite Ethernet-Schnittstelle 12, 13 auf. Mit Hilfe der Schnittstellen 12, 13 können die Schnittstellenmodule jeweils Nachrichten nach dem CSMA/CD (Carrier Sense Multiple Access/With Collision Detection) gemäß der Norm IEEE 802.3 senden und empfangen.

Das Schnittstellenmodul 10 empfängt beispielsweise über die Schnittstelle 12 auf einer ersten Ethernet-Verbindung 16 eine Nachricht 17. Die Schnittstelle 12 leitet die Nachricht 17 zu Prüfmittel 18, welche die Nachricht in einem Speicher 19, der vorliegend einen Bestandteil der Prüfmittel 18 bildet, zwischenspeichern. Die Prüfmittel 18 enthalten beispielsweise elektronische Schaltkreise, zum Beispiel logische AND-, OR-, NAND-Gatter, bei denen eine Prüfroutine 20 zur Nachrichtenprüfung sozusagen in Hardware realisiert ist.

Mit Hilfe der Prüfroutine 20 ermitteln die Prüfmittel 18, ob die Nachricht 17 ein Verarbeitungsmodul 21 betrifft, das mit dem Schnittstellenmodul 10 verbunden ist. Dazu vergleichen die Prüfmittel 18 eine in der zu überprüfenden Nachricht 17 enthaltene Information, beispielsweise die Internet-Adresse des Verarbeitungsmoduls 21 mit einer Vergleichsinformation 22, die im Speicher 19 abgelegt ist. Die Vergleichsinformation 22 kann beispielsweise die Internet-Adresse und/oder die MAC-Adresse des Verarbeitungsmoduls 21 enthalten. Es ist aber auch möglich, dass mehrere Adressen und/oder Adress-Masken in der Vergleichsinformation 22 enthalten sind. Im vorliegenden Fall ist die Nachricht 17 für das Verarbeitungsmodul 21 bestimmt und wird dementsprechend vom Schnittstellenmodul 10 über eine Verbindung 23 an das Verarbeitungsmodul 21 gesendet.

Anders verhält es sich mit einer Nachricht 24, welche das Schnittstellenmodul 10 über die Verbindung 16 an der Schnittstelle 12 empfängt. Auch die Nachricht 24 wird im Speicher 19 zwischengespeichert. Allerdings ergibt eine Überprüfung der Nachricht 24 anhand der Vergleichsinformation 22 durch die Prüfmittel 18, dass die Nachricht 24 nicht für das Verarbeitungsmodul 21 bestimmt ist. Daher sendet das Schnittstellenmodul 10 die Nachricht 24 über die Schnittstelle 13 auf einer zweiten Verbindung 25 an das Schnittstellenmodul 11 weiter.

Das Verarbeitungsmodul 21 dient zur Steuerung und/oder Überwachung einer Peripherie-Einrichtung 39 mit Ventilanordnungen 40, 41, 42. Diese enthalten beispielsweise Druckluftventile, die zum Beispiel zur Vorsteuerung eines oder mehrerer pneumatischer Antriebe dienen. Vorliegend bildet das Verarbeitungsmodul 21 einen Bestandteil der Peripherie-Einrichtung 39. Das Verarbeitungsmodul 21 ist beispielsweise ein sogenanntes Embedded System, eine speicherprogrammierbare Steuerung oder dergleichen. Das Verarbeitungsmodul 21 enthält einen Mikroprozessor 43 sowie Speicher 44. Im Speicher 44 sind ein Betriebssystem 29 sowie ein Steuerungsmodul 45 abgelegt, deren Befehlscode der Mikroprozessor ausführt. Hierzu werden die Module 29, 45 vom Mikroprozessor 43 geladen. Das Steuerungsmodul 45 dient zur Steuerung und/oder Überwachung der Ventilanordnungen 40 bis 42 und kann Nachrichten vom Schnittstellenmodul 10 empfangen sowie Nachrichten an dieses versenden.

Das Schnittstellenmodul 11 bildet einen Bestandteil einer Mikroprozessoranordnung 26, die zur Steuerung und Überwachung einer Peripherie-Einrichtung 27 vorgesehen ist. Bei der Peripherie-Einrichtung 27 handelt es sich beispielsweise um ein Wartungsgerät für eine fluidtechnische Anlage, die zum Beispiel mit Druckluft arbeitet. Es kann sich bei der Peripherie-Einrichtung 27 aber auch beispielsweise um einen Festplattenspeicher, eine Datenbank oder dergleichen handeln. Die Mikroprozessoranordnung 26 ist sehr schematisch dargestellt und enthält einen, also eine CPU. Der Mikroprozessor 28 führt Programmcode von einem Betriebssystem 29, einem Prüfmodul 30 sowie einem Steuerungsprogramm 31 aus. Der Programmcode der Module 29 bis 31 wird vom Mikroprozessor 28 beim Betriebsstart der Mikroprozessoranordnung 26 aus einem Speicher 32 geladen und ausgeführt. Der Speicher 32 enthält beispielsweise flüchtigen und nicht-flüchtigen Speicher, zum Beispiel RAM-Bausteine bzw. ROM-Bausteine. Vorzugsweise sind die Module 29 bis 31 in nicht-flüchtigen Speicherbereichen gespeichert.

Die Mikroprozessoranordnung 26 kann aus diskreten Bausteinen 12, 13, 32, 28 aufgebaut sein, die an einer elektrischen Leiterplatte angeordnet und miteinander verbunden sind. Vorzugsweise ist die Mikroprozessoranordnung 26 jedoch ein integriertes System, das heißt sie ist z.B. eine Ein-Chip-Mikroprozessoranordnung, deren Komponenten 12, 13, 32, 28 Bestandteile eines einzigen elektronischen Bausteins bilden. Im vorliegenden Fall ist die Mikroprozessoranordnung 26 zum Beispiel ein sogenannter ASIC.

Im Unterschied zum Schnittstellenmodul 10 sind die Prüfmittel beim Schnittstellenmodul 11 als Software realisiert und zwar in Form des Prüfmoduls 30, welches im wesentlichen die Funktionen der Prüfroutine 20 ausführt. Dies wird anhand der vom Schnittstellenmodul 11 empfangenen Nachricht 24 deutlich:

Das Prüfmodul 30 schreibt die Nachricht 24 in den Speicher 32, um die Nachricht 24 analysieren zu können. Bei der Überprüfung der Nachricht 24 ermittelt das Prüfmodul 30, beispielsweise anhand einer in der Nachricht 24 enthaltenen Internet-Adresse, dass die Nachricht 24 für das als Verarbeitungsmodul dienende Steuerungsprogramm 31 dient. Die Nachricht 24 enthält beispielsweise eine an das Steuerungsprogramm 31 gerichtete Instruktion. Das Prüfmodul 30 übermittelt daher die Nachricht 24 an das Steuerungsprogramm 31, welches gemäß der Instruktion beispielsweise einen Schalt- oder Abfragebefehl an die Peripherie-Einrichtung 27 ausgibt.

Die Mikroprozessoranordnung 26 repräsentiert sowohl das Schnittstellenmodul 11 als auch, wegen des Steuerungsprogramms 31, ein Verarbeitungsmodul. Prinzipiell wäre es aber auch möglich, dass ein separates Schnittstellenmodul, beispielsweise in der Art des Schnittstellenmodules 10, in eine Mikroprozessoranordnung integriert ist, wobei dann der Mikroprozessor selbst von der Prüfung von empfangenen Nachrichten entlastet ist, das heißt, dass beispielsweise bei der Mikroprozessoranordnung 26 das Prüfmodul 30 nicht erforderlich wäre.

Das Prüfmodul 30 überprüft anhand einer Vergleichsinformation 32, ob die Nachricht 24 an das als Verarbeitungsmodul dienende Steuerungsprogramm 31 weitergeleitet werden soll. Das Steuerungsprogramm 31 gibt an die Peripherie-Einrichtung 27 beispielsweise Schaltbefehle aus und erhält von der Peripherie-Einrichtung 27 Meldungen, beispielsweise eine Rückmeldung auf einen Schaltbefehl oder eine Störungsmeldung.

Eine Nachricht, die das Schnittstellenmodul 11 auf der Verbindung 25 erhält und die nicht für das Steuerungsprogramm 31 vorgesehen ist, leitet das Schnittstellenmodul 11 über seine Schnittstelle 13 auf einer Verbindung 33 weiter. Dies ist beispielsweise bei einer Nachricht 34 der Fall, die zunächst vom Schnittstellenmodul 10 auf der Verbindung 16 empfangen wird. Das Schnittstellenmodul 10 ermittelt, dass die Nachricht 34 nicht für das Verarbeitungsmodul 21 bestimmt ist und leitet dementsprechend die Nachricht 24 über die Schnittstelle 13 auf der Verbindung 25 an das Schnittstellenmodul 11 weiter. Auch das Schnittstellenmodul 11 ermittelt, dass die Nachricht 34 nicht für das Steuerungsprogramm 31 bestimmt ist. Dementsprechend leitet das Schnittstellenmodul 11 die Nachricht 34 auf der Verbindung 33 an eine nicht dargestellte Einrichtung, beispielsweise an ein Endgerät oder an eines oder mehrere weitere erfindungsgemäße Schnittstellenmodule, Mikroprozessoranordnungen oder dergleichen.

Wenn eine derartige Einrichtung auf der Verbindung 33 z.B. eine Nachricht 35 an das Schnittstellenmodul 11 sendet, empfängt das Schnittstellenmodul 11 die Nachricht 35 über die Schnittstelle 13 und überprüft mit Hilfe des Prüfmoduls 30, ob die Nachricht 35 für das Steuerungsprogramm 31 bestimmt ist. Wenn dies der Fall ist, wird die Nachricht 35 an das Steuerungsprogramm 31 gesendet, ansonsten auf der Verbindung 25 an das Schnittstellenmodul 11 weitergeleitet, welches dann überprüft, ob die Nachricht 35 für das Verarbeitungsmodul 21 bestimmt ist. Wenn dies zutrifft, wird die Nachricht 35 dem Verarbeitungsmodul 21 zugeführt, ansonsten auf der Verbindung 16 weiterversandt.

Wenn die Verarbeitungsmodule 21, 31 Nachrichten generieren, arbeiten die Schnittstellenmodule 11, 12 beispielsweise folgendermaßen:

Eine vom Steuerungsprogramm 31 generierte Nachricht 36 versendet das Schnittstellenmodul 11 sowohl auf der Verbindung 33 als auch auf der Verbindung 25. Wenn die Nachricht 36 für das Verarbeitungsmodul 21 bestimmt ist, wird sie vom Schnittstellenmodul 10 an dieses weitergeleitet, ansonsten auf der Verbindung 16 weiterversandt.

Eine vom Verarbeitungsmodul 21 erzeugte Nachricht 37 wird vom Schnittstellenmodul 10 sowohl auf der Verbindung 16 als auch auf der Verbindung 25 versendet.

Prinzipiell ist es aber auch möglich, dass die Schnittstellenmodule 10, 11 eine von dem ihnen jeweils zugeordneten Verarbeitungsmodul 21, 31 generierte Nachricht nicht auf jeder Verbindung 16, 25; 25, 33 versenden, sondern nur auf jeweils einer der vorgenannten Verbindungen. Beispielsweise können die Schnittstellenmodule 10, 11 eine Liste enthalten, in der jeweils über die Verbindungen 16, 25, 33 erreichbare Ziel-Kommunikationseinrichtungen eingetragen sind. In einer derartigen Liste wäre beispielsweise beim Schnittstellenmodul 10 für die Verbindung 25 das Schnittstellenmodul 11 eingetragen. Die Listen sind beispielsweise konfigurierbar und/oder werden von den Schnittstellenmodulen 11, 12 angelegt und/oder gepflegt. Jedenfalls überprüfen in einer derartigen Ausgestaltung der Erfindung die Schnittstellenmodule 10, 11 anhand der jeweiligen Liste, auf welcher der durch sie bedienten Verbindungen 16, 25, 33 eine vom jeweiligen Verarbeitungsmodul 21, 31 erzeugte Nachricht zu versenden ist.

Auf einer Ethernet-Verbindung werden jedoch nicht nur speziell an ein Ziel gerichtete Nachrichten versendet, sondern auch Nachrichten, die mehrere Ziele betreffen, z.B. sogenannte Broadcast-Nachrichten. Beispielsweise empfängt das Schnittstellenmodul 10 auf der Verbindung 16 eine Broadcast-Nachricht 38. Das Schnittstellenmodul 10 leitet die Nachricht 38 an das Verarbeitungsmodul 21 und an das Schnittstellenmodul 11 weiter.

Das Schnittstellenmodul 11 gibt die Nachricht 38 an das Steuerungsprogramm 31 weiter und versendet sie zudem auf der Verbindung 33.

Es könnte jedoch auch der Fall sein, dass eine Broadcast-Nachricht, z.B. die Nachricht 38, ein Verarbeitungsmodul, z.B. das Steuerungsprogramm 31, nicht betrifft. Für einen derartigen Fall sind dann z.B. Adressen oder Adressbereiche, zum Beispiel in Form von Adressmasken, in den Vergleichsinformationen 32 enthalten, anhand derer das Prüfmodul 30 eine jeweilige Broadcast-Nachricht als für das Steuerungsprogramm 31 irrelevant erkennen und dementsprechend auf der Verbindung 33 weiterleiten kann, wenn die Nachricht auf der in Verbindung 36 empfangen wurde oder umgekehrt.

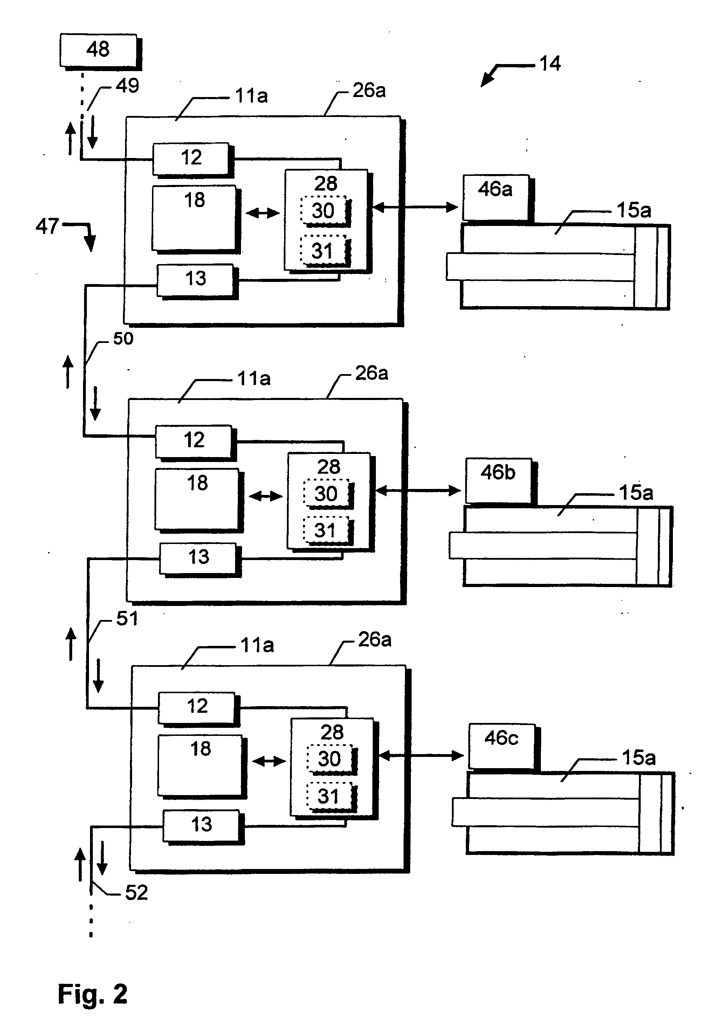

Figur 2 zeigt eine Peripherie-Einrichtung 14 mit Arbeitszylindern 15a bis 15c die durch Steuerungsmodule 26a bis 26c gesteuert werden. Die Steuerungsmodule 26a bis 26c entsprechen im wesentlichen der Mikroprozessoranordnung 26, wobei aus Gründen der Übersichtlichkeit einige Komponenten in der Figur 2 nicht gezeigt sind. Die Steuerungsmodule 26a bis 26c enthalten Schnittstellenmodule 11a bis 11c, die im wesentlichen dem Schnittstellenmodul 11 entsprechen, wobei auch hier aus Gründen der Übersichtlichkeit nicht alle Komponenten der Schnittstellenmodule 11a bis 11c gezeigt sind. Komponenten aus Figur 2, die denjenigen aus Figur 1 entsprechen, sind mit denselben Bezugszeichen versehen.

Die Arbeitszylinder 15a bis 15c sind beispielsweise Druckluft-Zylinder oder sonstige fluidtechnische Aktoren, die vorliegend zum Antrieb jeweils einer Arbeitsachse der Peripherie-Einrichtung 14, die beispielsweise ein Handhabungsgerät ist, dienen. Die Arbeitszylinder 15a bis 15c sind fluidtechnische Aktoren, denen jeweils eine fluidtechnische Steuerungsanordnung 46a, 46b bzw. 46c zugeordnet ist, welche die Fluidbeaufschlagung des jeweiligen Arbeitszylinders 15a bis 15c steuern und/oder überwachen.

Die Steuerungsanordnungen 46a bis 46c erhalten Steuerungsbefehle von den Steuerungsmodulen 26a bis 26c, bei denen beispielsweise eines oder mehrere Steuerungsprogramme in der Art des Steuerungsprogramms 31 vorgesehen sind. Die Steuerungsmodule 26a bis 26c kommunizieren über einen seriellen Ethernet-Bus 47 der durch serielles Hintereinanderschalten der Schnittstellenmodule 11a bis 11c gebildet wird. An den Ethernet-Bus 47 ist direkt oder über ein Netzwerk, beispielsweise über das Internet oder über ein lokales Netzwerk (z.B. ein LAN), eine Kommunikationseinrichtung 48 angeschlossen, bei der es sich zum Beispiel um eine zentrale Steuerung und/oder um ein Bediengerät für die Peripherie-Einrichtung 14 handeln kann. Eine als zentrale Steuerung oder als Bediengerät ausgestaltete Kommunikationseinrichtung 48 kann auch ein erfindungsgemäßes Schnittstellenmodul enthalten. Es können neben der Kommunikationseinrichtung 48 auch weitere Kommunikationseinrichtungen, beispielsweise über ein Netzwerk, an den Bus 47 angeschlossen sein.

Der Bus 47 enthält Verbindungen 49 bis 52. Die Verbindung 49 führt von der Kommunikationseinrichtung 48 zur Schnittstelle 12 des Schnittstellenmoduls 11a. Die Schnittstellenmodule 11a, 11b sind über die Verbindung 50 und die Schnittstellenmodule 11b, 11c über die Verbindung 51 miteinander verbunden. Die Verbindung 52 führt vom Schnittstellenmodul 11c zu einer nicht dargestellten Einrichtung, beispielsweise zu einem Anzeigegerät, an dem der Status der Peripherie-Einrichtung 14 angezeigt wird. Es versteht sich, dass die Peripherie-Einrichtung 14 auch lediglich zwei der Steuerungsmodule 26a bis 26c oder weitere, nicht dargestellte Steuerungsmodule enthalten kann, die vorzugsweise an den Bus 47 seriell angekoppelt sind.

Durch die serielle Verknüpfung der Schnittstellenmodule 11a bis 11c über den Bus 47 sind verhältnismäßig wenige Verbindungsleitungen erforderlich. Zudem muss die Peripherieeinrichtung 14 keinen separaten Netzknoten, beispielsweise einen Hub oder Switch enthalten, um die Steuerungsmodule 26a bis 26c untereinander sowie mit einer oder mehreren externen Kommunikationseinrichtungen, beispielsweise der Kommunikationseinrichtung 48, zu vernetzen.

Weitere Varianten der Erfindung sind ohne weiteres möglich:

Ein erfindungsgemäßes Schnittstellenmodul kann auch mehrere Verarbeitungsmodule bedienen, das heißt als Kommunikationsschnittstelle für diese Verarbeitungsmodule dienen. Beispielsweise könnte an das Schnittstellenmodul 10 gemäß Figur 1 ein Verarbeitungsmodul 21' über eine Verbindung 23' angeschlossen sein, das einen Aktor 40' steuert und/oder überwacht. Bei dem Aktor 40 handelt es sich beispielsweise um eine Anordnung mit einem oder mehreren Elektromotoren. Wenn das Schnittstellenmodul 10 eine Nachricht auf einer der Verbindungen 16, 25 empfängt, überprüft es, ob die jeweilige Nachricht das Verarbeitungsmodul 21 oder das Verarbeitungsmodul 21' betrifft und leitet die Nachricht entsprechend an eines der Verarbeitungsmodule 21, 21' weiter. Ansonsten wird die Nachricht auf der jeweils anderen Verbindung 25 bzw. 16 weiter versendet. Eine Broadcast-Nachricht, beispielsweise die Broadcast-Nachricht 38, übermittelt das Schnittstellenmodul 10 zu beiden Verarbeitungsmodulen 21, 21'. Es versteht sich, dass auf die derartige Weise auch mehr als zwei Verarbeitungsmodule durch ein erfindungsgemäßes Schnittstellenmodul bedient werden können.

## Patentansprüche

1. Schnittstellenmodul mit mindestens einer ersten Ethernet-Schnittstelle (12) zum Senden und Empfangen von Nachrichten (17, 24, 34-36, 38) auf einer ersten Ethernet-Verbindung (16; 25) und mit mindestens einer zweiten Ethernet-Schnittstelle (13) zum Senden und Empfangen von Nachrichten (17, 24, 34-36, 38) auf einer zweiten Ethernet-Verbindung (25; 33), **dadurch gekennzeichnet, dass** es Prüfmittel (20; 30) zum Überprüfen einer von auf der ersten Verbindung (16; 25) empfangenen Nachricht (17, 24, 34-36, 38) aufweist, wobei die Prüfmittel (20; 30) bei der Überprüfung eine Adressinformation der Nachricht (17, 24, 34-36, 38) auswerten und wobei die Prüfmittel (20; 30) die Nachricht (17, 24, 34-36, 38) an mindestens ein mit dem Schnittstellenmodul (10, 11) verbundenes oder verbindbares Verarbeitungsmodul (21, 31) weiterleiten, wenn die Nachricht (17, 24, 34-36, 38) das mindestens eine Verarbeitungsmodul (21, 31) betrifft, und ansonsten die Nachricht (17, 24, 34-36, 38) auf der zweiten Verbindung (25; 33) weitersenden.

2. Schnittstellenmodul nach Anspruch 1, **dadurch gekennzeichnet, dass** die Prüfmittel (20; 30) derart ausgestaltet sind, dass sie eine auf der zweiten Verbindung (25; 33) empfangene Nachricht (17, 24, 34-36, 38) an das mindestens eine Verarbeitungsmodul (21, 31) weiterleiten, wenn die Nachricht (17, 24, 34-36, 38) das mindestens eine Verarbeitungsmodul (21, 31) betrifft, und ansonsten die Nachricht (17, 24, 34-36, 38) auf der ersten Verbindung (16; 25) weitersenden.

3. Schnittstellenmodul nach Anspruch 1 oder 2, **dadurch gekennzeichnet, dass** die Prüfmittel (20; 30) als Adressinformation der jeweils zu überprüfenden Nachricht (17, 24, 34-36, 38) eine Internet-Adresse und/oder eine MAC-Adresse (Media Access Controller) der Nachricht (17, 24, 34-36, 38) auswerten.

4. Schnittstellenmodul nach einem der vorhergehenden Ansprüche, **dadurch gekennzeichnet, dass** den Prüfmitteln (20; 30) ein Speicher (19, 32) zugeordnet ist, in dem die jeweils zu überprüfende Nachricht (17, 24, 34-36, 38) bei der Überprüfung zumindest teilweise zwischenspeicherbar ist.

5. Schnittstellenmodul nach einem der vorhergehenden Ansprüche, **dadurch gekennzeichnet, dass** die Prüfmittel (20; 30) zumindest teilweise als elektronische Schaltkreise ausgeführt sind.

6. Schnittstellenmodul nach einem der vorhergehenden Ansprüche, **dadurch gekennzeichnet, dass** das Schnittstellenmodul (10, 11) und das mindestens eine Verarbeitungsmodul (21, 31) Bestandteile einer Mikroprozessoranordnung (26), insbesondere eines Embedded Systems, bilden.

7. Schnittstellenmodul nach Anspruch 6, **dadurch gekennzeichnet, dass** die Prüfmittel (30) und/oder das mindestens eine Verarbeitungsmodul (31) Programmcode enthalten, der von einem Mikroprozessor (28) der Mikroprozessoranordnung (26) ausgeführt wird.

8. Schnittstellenmodul nach einem der Ansprüche 6 oder 7, **dadurch gekennzeichnet, dass** die Mikroprozessoranordnung (26) als eine Ein-Chip-Mikroprozessoranordnung ausgestaltet ist, deren Komponenten Bestandteile eines einzigen elektronischen Bausteins bilden.

9. Schnittstellenmodul nach einem der vorhergehenden Ansprüche, **dadurch gekennzeichnet, dass** es mit dem mindestens einen Verarbeitungsmodul (21, 31) zu einer Baueinheit (26; 26a-26c) zusammengefasst ist, die insbesondere zu einer steuerung und/oder Überwachung einer insbesondere fluidtechnischen Peripherie-Einrichtung (39, 27) ausgestaltet ist.

10. Peripherie-Einrichtung, insbesondere Handhabungsgerät, mit mindestens einem Verarbeitungsmodul (21, 31) zu ihrer Steuerung und/oder Überwachung und mit mindestens einem ersten Schnittstellenmodul (10, 11; 11a-11c) nach einem der vorhergehenden Ansprüche.

11. Peripherie-Einrichtung nach Anspruch 10, **dadurch gekennzeichnet, dass** sie mindestens eine fluidtechnische Einrichtung (40-42; 46a-46c, 15a-15c), insbesondere ein Wartungsgerät oder eine Ventilanordnung, enthält.

12. Peripherie-Einrichtung nach Anspruch 10 oder 11, **dadurch gekennzeichnet, dass** sie mindestens ein zweites Schnittstellenmodul (10, 11; 11a-11c) nach einem der Ansprüche 1 bis 9 aufweist, und dass das erste und das mindestens eine zweite Schnittstellenmodul (10, 11; 11a-11c) in Serie geschaltet sind.

## Claims

1. Interface module with at least one first ethernet interface (12) for the sending and receiving of messages (17, 24, 34-36, 38) to a first ethernet connection (16; 25), and with at least one second ethernet interface (13) for the sending and receiving of messages (17, 24, 34-36, 38) to a second ethernet connection (25; 33), **characterised in that** it has test means (20; 30) for checking a message (17, 24, 34-36, 38) received on the first connection (16; 25) wherein, in the course of checking, the test means (20; 30) analyse an address information of the message (17, 24, 34-36, 38), and wherein the test means (20; 30) pass the message (17, 24, 34-36,38) on to one or more processing modules (21, 31) connected or connectable to the interface module (10, 11) if the message (17, 24, 34-36, 38) concerns the processing module or modules (21, 31), and otherwise pass the message (17, 24, 34-36, 38) on to the second connection (25; 33).

2. Interface module according to claim 1, **characterised in that** the test means (20; 30) are so designed that they pass on to the processing module or modules (21, 31) a message (17, 24, 34-36, 38) received at the second connection (25; 33) if the message (17, 24, 34-36, 38) concerns the processing module or modules (21, 31), and otherwise pass the message (17, 24, 34-36, 38) on to the first connection (16; 25).

3. Interface module according to claim 1 or 2, **characterised in that** the test means (20; 30) analyse, as address information of the respective message (17, 24, 34-36, 38) to be checked, an internet address and/or an MAC address (Media Access Controller) of the message (17, 24, 34-36, 38).

4. Interface module according to any of the preceding claims, **characterised in that** the test means (20; 30) are assigned a memory (19, 32) in which the respective message (17, 24, 34-36, 38) to be checked may be at least partially held in intermediate storage during checking.

5. Interface module according to any of the preceding claims, **characterised in that** the test means (20; 30) are at least partly in the form of electronic circuits.

6. Interface module according to any of the preceding claims, **characterised in that** the interface module (10, 11) and the processing module or modules (21, 31) form parts of a microprocessor unit (26), in particular an embedded system.

7. Interface module according to claim 6, **characterised in that** the test means (30) and/or the processing module or modules (31) contain program code which is executed by a microprocessor (28) of the microprocessor unit (26).

8. Interface module according to any of claims 6 or 7, **characterised in that** the microprocessor unit (26) is designed as a single-chip microprocessor unit, the components of which form parts of a single electronic module.

9. Interface module according to any of the preceding claims, **characterised.in that** it is combined with the processing module or modules (21, 31) to form a unit (26; 26a-26c) which is designed in particular for the control and/or monitoring of a peripheral device (39, 27), in particular a fluidic device.

10. Peripheral device, in particular a handling device, with one or more processing modules (21, 31) for its control and/or monitoring, and with one or more first interface modules (10, 11; 11a-11c) according to any of the preceding claims.

11. Peripheral device according to claim 10, **characterised in that** it contains one or more fluidic devices (40-42; 46a-46c, 15a-15c), in particular an air conditioner unit or a valve assembly.

12. Peripheral device according to claim 10 or 11, **characterised in that** it has one or more second interface modules (10, 11; 1 1a-11c) according to any of claims 1 to 9, and that the first interface module and the second interface module or modules (10, 11; 11a-11c) are connected in series.

## Revendications

1. Module d'interface comprenant au moins une première interface Ethernet (12) permettant d'envoyer et de recevoir des messages (17, 24, 34-36, 38) sur une première liaison Ethernet (16 ; 25), et comprenant au moins une deuxième interface Ethernet (13) permettant d'envoyer et de recevoir des messages (17, 24, 34-36, 38) sur une deuxième liaison Ethernet (25 ; 33), **caractérisé en ce qu'**il présente des moyens de contrôle (20 ; 30) permettant de contrôler un message (17, 24, 34-36, 38) reçu sur la première liaison (16 ; 25), les moyens de contrôle (20 ; 30), lorsqu'ils effectuent la vérification, évaluant une information d'adresse du message (17, 24, 34-36, 38) et les moyens de contrôle (20 ; 30) transmettant le message (17, 24, 34-36, 38) à au moins un module de traitement (21, 31) relié, ou susceptible d'être relié, au module d'interface (10, 11), lorsque le message (17, 24, 34-36, 38) concerne le module de traitement (21, 31), au nombre minimum d'un, et retransmettant le message, dans un autre cas, sur la deuxième liaison (25 ; 33).

2. Module d'interface selon la revendication 1, **caractérisé en ce que** les moyens de contrôle (20 ; 30) sont conçus de telle sorte qu'ils transmettent un message (17, 24, 34-36, 38) reçu sur la deuxième liaison (25 ; 33) au module de traitement (21, 31), qui est au nombre minimum d'un, lorsque le message (17, 24, 34-36, 38) concerne le module de traitement (21, 31), et retransmettent le message (17, 24, 34-36, 38), dans un autre cas, sur la première liaison (16 ; 25).

3. Module d'interface selon la revendication 1 ou 2, **caractérisé en ce que** les moyens de contrôle (20 ; 30) évaluent, comme information d'adresse du message (17, 24, 34-36, 38) qu'ils doivent vérifier, une adresse Internet et/ou une adresse MAC (méthode d'accès aux supports) du message (17, 24, 34-36, 38).

4. Module d'interface selon l'une des revendications précédentes, **caractérisé en ce qu'**aux moyens de contrôle (20 ; 30) est associée une mémoire (19, 32) dans laquelle le message (17, 24, 34-36, 38) qu'il convient de vérifier est stocké, de façon intermédiaire, au moins partiellement, lors de sa vérification.

5. Module d'interface selon l'une des revendications précédentes, **caractérisé en ce que** les moyens de contrôle (20 ; 30) sont conformés, au moins partiellement, en circuits électroniques.

6. Module d'interface selon l'une des revendications précédentes, **caractérisé en ce que** le module d'interface (10, 11) et le module de traitement (21, 31), qui est au nombre minimum d'un, font partie d'un système à microprocesseur (26), en particulier d'un Système Intégré.

7. Module d'interface selon la revendication 6, **caractérisé en ce que** les moyens de contrôle (30) et/ou le module de traitement (31), au nombre minimum d'un, contiennent un code de programme, qui est exécuté par un microprocesseur (28) du système à microprocesseur (26).

8. Module d'interface selon l'une des revendications 6 ou 7, **caractérisé en ce que** le système à microprocesseur (26) est conformé en système à microprocesseur monopuce, dont les composants font partie d'un module électronique unique.

9. Module d'interface selon l'une des revendications précédentes, **caractérisé en ce qu'**il forme, avec le module de traitement (21, 31) au nombre minimum d'un, une unité constructive (26 ; 26a-26c), qui est conçue, en particulier, pour commander et/ou surveiller un périphérique (39, 27) appliqué, en particulier, dans le domaine de la technique des fluides.

10. Périphérique, en particulier appareil de manipulation, comprenant au moins un module de traitement (21, 31) destiné à le commander et/ou le surveiller et au moins un premier module d'interface (10, 11 ; 11a-11c) selon l'une des revendications précédentes.

11. Périphérique selon la revendication 10, **caractérisé en ce qu'**il comprend au moins un dispositif (40-42 ; 46a-46c, 15a-15c) relevant du domaine de la technique des fluides, en particulier un appareil de maintenance ou un dispositif formant soupape.

12. Périphérique selon la revendication 10 ou 11, **caractérisé en ce qu'**il présente au moins un deuxième module d'interface (10, 11 ; 11a-11c) selon l'une des revendications 1 à 9, et **en ce que** le premier module et le deuxième module d'interface (10, 11 ; 11a-11c), au nombre minimum d'un, sont montés en série.
